# EUROPEAN PATENT APPLICATION

(11) **EP 1 325 952 A1**
(43) Date of publication of application: **09.07.2003**
(21) Application number: 01830836.1
(22) Date of filing: 31.12.2001
(51) Int. Cl.: C12G 1/02, C12J 1/02, C12G 3/02

(54) **Food products based on fruits and a process for their production**

(71) Applicant: Monari Federzoni S.p.A., 41030 Solara di Bomporto (Modena) (IT)
(72) Inventor: Massucco, Wilma, 41030 Bomporto (Modena) (IT); Marchetti, Ivan, 41030 Bomporto (Modena) (IT)
(74) Representative: Gislon, Gabriele

(57) **Abstract**

Food products such as vinegars, sweet wines with distinct aromatic constituents, seasonings, fruit juices, creams, pickles, preserves and jams in general, are obtained from fruit musts by concentrating the fruit musts at a volume ranging from 0.8 and 0.1 of the initial volume, with 1.0 as the initial volume, inoculating said concentrated fruit musts with a yeast and fermenting the inoculated must.

## Description

The present invention relates to new food products obtained from fruit and to a process to obtain them through fermentation. In greater detail, the invention relates to a process to produce food products such as vinegars, sweet wines with distinct aromatic constituents, seasonings, fruit juices, creams, pickles, preserves and jams in general, starting with concentrated fruit musts.

One of the problems in agriculture is the transformation of fruit into imperishable finished food products. This problem is particularly significant when there is a surplus in production; in general the solution is distillation or destruction, both of low economic interest for the agricultural producer and costly for the community.

Another problem is the transformation of fruit into food products with a high added value.

An example of food products obtained from fruit, with a high economic value and excellent organoleptic properties are "special" vinegars and vinegar-based seasonings. The term special vinegars indicates aged vinegars, balsamic vinegars and aromatic or aromatised vinegars, that is to say vinegars containing fruit extracts or concentrates and in any case vinegars other than wine vinegar. An example of a special vinegar of great economic success is balsamic vinegar of Modena. The term seasoning indicates a food substance produced to season foods; examples of seasonings are "balsamic" products such as the traditional balsamic vinegar of Modena. The invention relates in particular to a balsamic vinegar of Modena, but is not limited to this type of vinegar and also covers the production of aromatic or aromatised vinegars, in general, sweet wines with distinct aromatic constituents, seasonings, fruit juices, creams and jams in general.

Balsamic Vinegar of Modena is essentially obtained from concentrated and cooked musts with the addition of a percentage of vinegar aged for at least 10 years, to give the product the typical organoleptic properties, and with or without the addition of vinegar obtained through acetification of wine alone. Caramel may be added as colouring to Balsamic Vinegar of Modena. Balsamic Vinegar of Modena must have a total acidity expressed in acetic acid of no less than 6 grams per one hundred millilitres.

The object of the present invention is to provide a process to obtain food products starting with fruit, and particularly with grapes, with excellent organoleptic properties and high economic value.

A further object of the present invention is to solve this problem without using chemical additives and in order to rapidly provide a final product with distinct organoleptic constituents.

Another object of the invention is to provide a special vinegar starting with grape must, and particularly to provide a balsamic vinegar or seasoning.

Yet another object of the present invention is to rapidly obtain a wine with a high sugar content and a pleasantly consistent aromatic complexity.

These objects are attained through the present invention, that relates to a process to produce food products from fruit musts, characterized in that it comprises the steps of concentrating said fruit musts, inoculating the concentrated and/or cooked fruit musts with a yeast and fermenting the inoculated must.

According to one aspect of the invention, the yeast is selected from yeasts of the genus *Saccaromyces, Zygosaccharomyces, Hanseniaspora, Kloeckera* and their mixtures.

In a particular embodiment, the invention provides a process to produce special vinegar from musts of concentrated and/or cooked grapes, characterized in comprising the steps of: inoculating said musts with a yeast selected from the yeasts *Saccaromyces, Saccharomyces Cerevisiae, Zygosaccharomyces, Saccharomyces Bayanus, Kloeckera,* fermenting the inoculated must, mixing said fermented must with wine vinegar. In addition to the steps indicated above when balsamic vinegar of Modena is produced, it is also provided the step of mixing with: wine vinegar aged for at least 10 years, further concentrated or cooked must and caramel if desired.

This result is particularly surprising in view of prior known art. It is in fact known to the art of wine making that musts (non-concentrated) being alcoholically fermented are inoculated with commercial "wine" yeasts, in addition to the naturally present yeasts, to improve the aroma of the wine through the byproducts of fermentation obtained from these yeasts.

Nonetheless, in the field of alcoholic fermentation of musts, it is well known that sugar concentrations higher than 250-300 g/kg strongly inhibit microbiological activity in the majority of yeasts and bacteria, making any fermenting process difficult or, in any case, slow.

Therefore, it was thought that extremely long fermentation times were required in order for cooked/concentrated musts to develop appreciable and consistent quantities of aromas, in the same way as it occurs in the production of traditional balsamic vinegar of Modena, which requires 12 years of fermentation and ageing.

According to a preferred aspect, the fermentation time according to the invention is within the range of 1 day to 8 months, preferably between 2 days and 6 months, and even more preferably between 5 and 30 days.

According to another aspect of the invention, the yeasts are inoculated and dispersed in the must in a quantity within the range of 0.001 to 10 g/l of dry yeast and more preferably from 0.01 to 0.8 g/l of dry yeast.

In this description the wording "to concentrate" and "concentrated must" is meaning the process and the product obtained through pressing the fruit, optionally eliminating any skins and solids and concentrating the liquid obtained by removing water to reduce the initial volume by at least 20% and preferably by 30% - 90% depending on the fruit, meaning that the final volume is between 0.8 and 0.1 times the initial volume, with an initial volume equal to 1.0. Concentration may be carried out in any way and according to any process known to the art, for example those used for grape musts (cooking, heating under vacuum) reverse osmosis and similar.

"Cooked grape must" means the product deriving from grape must (must that initially has a sugar content of about 130-250 g/kg), after elimination of water by heating over a direct heat and at atmospheric pressure. Cooked grape musts have a sugar content of around 260-530 g/kg. "Concentrated grape must" means the product deriving from grape must after the elimination of water by heating under vacuum, i.e. excluding the use of direct heat. Concentrated grape musts have a sugar content of around 440-650g/kg.

All types of fruit that can be reduced to must, contain sugars and can be fermented can be used. In addition to grapes, fruits such as apples, pears, cherries, plums, apricots, peaches, figs, dates, strawberries and other forest berries can be used.

The invention has numerous advantages. In fact, by adding selected yeasts it is possible to obtain partial or total alcoholic fermentation of the concentrated or cooked must extremely rapidly, and to develop an entirely peculiar aromatic constituent that differs from the one obtained through simple enrichment of the product with extracts or with unfermented concentrated or cooked must.

Another object of the invention is a concentrated or cooked fruit must, as obtainable with the above disclosed process, characterized in that it has a sugar content of at least 50 g/kg and an ethyl alcohol content ranging from 1% to 15% in volume.

Said must fermented according to the above mentioned.process is characterised by a totally distinctive aromaticity and can be used as starting material in the production of special vinegar, particularly balsamic vinegar of Modena, to provide a product having a complex and varied organoleptic constituent, different from the one obtainable with known production processes.

Moreover, a grape must concentrated and fermented according to the invention process can be used in the production of a very aromatic wine, with a high alcohol and sugar content.

A further object of the invention is therefore the use of a concentrated and/or cooked grape must, fermented in the manner described above, for the preparation of a wine.

Another object of the invention is a concentrated or cooked and fermented grape must, as obtainable with the process described above, characterized in that it has a content of at least 50 g/kg of sugars and an ethyl alcohol content ranging from 1% to 15% in volume.

Yet another object of the present invention is a process for the preparation of a wine, characterised in that a concentrated and/or cooked grape must is fermented with yeasts selected from the genus *Saccharomyces (specifically Saccharomyces Cerevisiae and Saccharomyces Bayanus), Zygosaccharomyces, Hanseniaspora, Kloeckera* and their mixtures.

The invention shall now be described in greater detail with reference to the accompanying drawing schematically showing, as a non-limiting example, a fermenter to implement the process according to the invention.

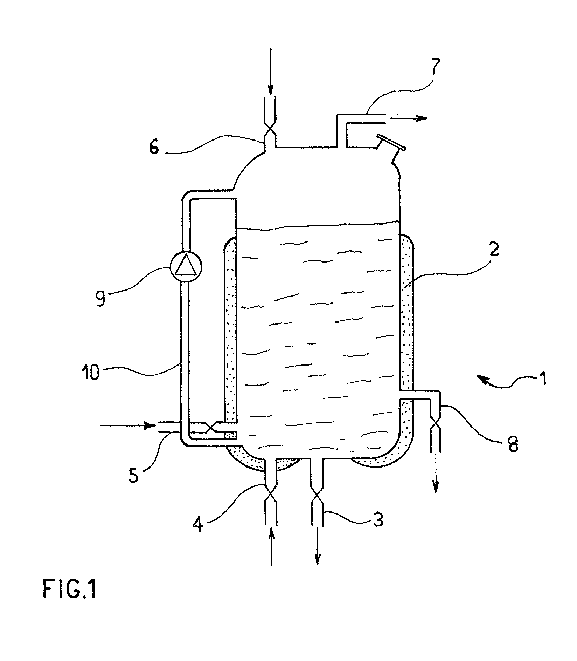

With reference to fig. 1, the device to implement the invention requires only one fermenter 1, which is provided in a known way with an external heat-regulating liner 2, a drain pipe 3, a pipe 4 to feed steam and/or water for washing and sterilizing the fermenter and a pipe 5 to feed the substrate, namely the concentrated or cooked must. At the top is a pipe 6 to feed the yeast and a vent pipe 7 for gas; the samples of must required for analysis are taken from the pipe 8. There is also a pipe 10 that extends from the bottom of the fermenter to its upper portion; this pipe is fitted with a pump to pump over the content, from the bottom to the top, to homogenize the yeast with the must.

As mentioned above, fermentation is performed on concentrated musts, cooked musts or mixtures thereof.

A typical composition of concentrated and cooked must is as follows:

| | Concentrated must | Cooked must |
|---|---|---|
| Sugars (g/kg) | 440 - 650 | 260 - 530 |
| Density | 1.2398 - 1.3575 | 1.1095 - 1.2891 |
| Total acidity (g/100ml Tartaric Ac.) | 0.6 - 2.5 | 0.6 - 2.5 |
| Alcohol (%Vol) | traces | traces |

Yeasts suitable for the process of the invention are selected from yeasts of the genus *Saccharomyces (specifically Saccharomyces Cerevisiae and Saccharomyces Bayanus), Zygosaccharomyces, Hanseniaspora, Kloeckera.*

Those preferred from the *Saccharomyces* are *Saccaromyces Cerevisiae and Saccaromyces Bayanus,* for example the strains MF1 or MF2 filed with DBVPG Industrial Yeasts Collection. It is possible to use several yeasts from the same genus or family, or yeasts of different genera and families mixed together.

The above indicated strains were filed on 17.12.2001 with Industrial Yeasts Collection DBVPG (Department of Vegetable Biology and Agrienvironmental Biotechnologies - University of Perugia) with the following references: "DBVPG 6P" for the strain MF1 and "DBVPG 7P" for the strain MF2.

The yeast is rehydrated according to the usual process, preferably with water and must according to the following ratios (in weight):
concentrated/cooked must: 8-15%
dry yeast: 7-12%
water: 73-85%

The rehydrated yeast, or a mixture of yeasts, is added to the must within the fermenter in a quantity exceeding 0.001 g/l of dry yeast.

The yeast addition is followed by a homogenisation step of the must/yeast mixture, which is performed with the pump 9 which pumps over the total mass an adequate number of times.

The temperature of the inoculated mass is increased to a value within the range of 0 to 48°C and preferably within the range of 25 to 35°C and fermentation is started.

During fermentation the mass is periodically pumped over to guarantee homogenisation; the total mass is preferably pumped over every 24 hours. Fermentation continues for a period of time that differs according to the yeast used and to the required final composition; if a high alcohol content is required, fermentation times are increased, while fermentation times are short if a low alcohol content is required. Times generally range from 1 day to 8 months and it is possible to obtain an alcohol content exceeding 15% vol.

When fermentation has reached the desired value for ethanol and/or correlated products, and if it has not already stopped spontaneously through the inhibiting action of the ethyl alcohol that has developed, it is stopped by adding wine vinegar in the proportions required to obtain the vinegar desired.

In particular, in the case of balsamic vinegar of Modena, the final product will have an alcohol content below 1.5% vol and a minimum total acidity (in acetic acid) of 6%.

According to an aspect of the invention, the must is fermented to the maximum value of alcohol obtainable, which is around 8-15% in volume, when fermentation stops naturally.

The alcoholic must thus obtained has a sugar content exceeding 50 g/kg and is used to produce aromatic sweet wine.

The invention shall now be further disclosed with the following examples, provided merely as non-limiting examples.

### Example 1 - Production of balsamic vinegar of Modena

660 litres of concentrated grape must, with a sugar content of 495 g/kg, a density of 1.24955 and alcohol content of 0.06 (% vol.) are inoculated with 0.5 g/l of rehydrated yeast *MF1.* The rehydrated yeast was prepared with 9 parts in weight of yeast, 10 parts in weight of cooked must and 81 parts in weight of water.

The inoculated must is homogenized by pumping over the total mass 5 times at a flow rate of 100 hl/hour, for 20 minutes, and its temperature is increased to 28-30°C. Pumping over is repeated every 24 hours for the next 30 days. After 15 and 30 days, respectively, the must has the following content:

| | 0 days | 15 days | 30 days |
|---|---|---|---|
| sugar (g/kg) | 495.13 | 427.98 | 399.78 |
| relative density at 20°C | 1.24955 | 1.23010 | 1.20610 |
| Alcohol (% vol.) | <0.06 | 3.12 | 5.76 |

The fermented concentrated must thus obtained has particularly rich and varied smell and taste characteristics, with complex and persistent aromas, as can be seen in table 1 which highlights the presence of considerable quantities of fatty acids ethyl esters, which impart a fruity aroma to the fermentation product. The ethyl esters of fatty acids were not detectable in the unfermented must and hence their presence is an evidence of the fact that the process according to the invention was carried out. 20 litres of fermented must are then cut, purely as an example, with 54 litres of wine vinegar, 0.15 litres of vinegar aged for 10 years, 24 litres of concentrated grape must (unfermented) and 2 litres of caramel to give, after filtration, a Balsamic Vinegar of Modena with excellent organoleptic properties.

### Example 2 - Production of aromatic sweet wine

660 litres of cooked grape must, with a sugar content of 270 g/kg, a density of 1.13880 and an alcohol content of 0.06 (% vol.) are inoculated with 0.5 g/l of rehydrated *MF2* yeast. The rehydrated yeast was prepared with 9 parts in weight of yeast, 10 parts in weight of cooked must and 81 parts in weight of water.

The inoculated must is homogenized by pumping over the total mass 5 times with a pump with a flow rate of 100 hl/hour, for 20 minutes and its temperature is raised to 28-30°C. Pumping over is repeated every 24 hours for the next 30 days. After 15 and 30 days respectively the must has the following content:

| | 0 days | 15 days | 30 days |
|---|---|---|---|
| sugars (g/kg) | 270.42 | 184.68 | 78.42 |
| relative density at 20°C | 1.13880 | 1.08600 | 1.06680 |
| alcohol (% vol.) | <0.02 | 5.10 | 11.49 |

The fermented concentrated must thus obtained has a high content of natural sugars (i.e. sugars not added), particularly rich and varied smell and taste characteristics, with complex and persistent aromas, and a ethyl alcohol content that qualifies the must as wine.

It has been verified that to obtain a wine, i.e. an alcohol content higher than about 8% vol., in a short time it is preferable to use musts with sugar contents of less than 400 g/kg, as these presumably allow the micro-organisms to withstand the increasing alcohol concentration.

Preferably, the sugar content of the initial must, that is the concentrated/cooked must to be inoculated, is in the range of 250 to 380 g/kg.

The following table shows the results of fermentation according to example 1:

**Table 1 -**

| Comparison of SPME test results between Concentrated and Fermented grape musts | | | |
|---|---|---|---|
| **Product** | **Concentrated Must** | **Fermented Must** | |
| **Volatile compounds** | **Relative intensity (**^{**1**}**)** | | **Aromas** |
| *Ethanol* | * | *** | Alcoholic |
| *Ethyl* acetate | - | *** | ethereal, fruity, brandy |
| *acetyl methyl carbinol* | - | - | Butter |
| *Isoamyl alcohol* | * | *** | fusel, whisky |
| *Isoamyl acetate* | * | *** | fruity, banana |
| *Furan compounds* | ** | * | caramel, cooked |
| *Phenyl ethyl acetate* | - | *** | flowery, balsamic |
| *Phenyl ethyl alcohol* | - | *** | flowery, rose |
| *Ethyl* esters *of fatty* acids | - | *** | fruity, brandy |

| | | | |
|---|---|---|---|
| (¹) * = low; ** = average; *** = high; - = compound absent | | | |

## Claims

1. A process of producing food products from fruit musts, **characterized in** concentrating said fruit musts, inoculating said fruit musts with a yeast and fermenting the inoculated must.

2. A process according to claim 1, wherein said musts are concentrated to take them to a volume within the range of 0.8 to 0.1 of the initial volume, 1.0 being said initial must volume.

3. A process according to claim 1 or 2, wherein the fermentation time is within the range of 1 day to 8 months.

4. A process according to claim 1, 2 or 3, wherein the yeasts are inoculated and dispersed in the must in a quantity within the range from 0.001 and 10 g/l of dry yeast.

5. A process according to any previous claim, wherein said must is grape must and further including the step of mixing said concentrated and fermented must with more concentrated or cooked must and with a wine vinegar and/or wine vinegar aged for at least 10 years.

6. A process according to any previous claim, wherein said yeast is selected from yeasts of the genus *Saccaromyces, Zygosaccharomyces, Hanseniaspora, Kloeckera* and mixtures thereof.

7. A process according to claim 6, **characterized in that** said yeast is selected from *Saccaromyces Cerevisiae and Saccaromyces Bayanus.*

8. A process as claimed in claim 7, wherein said yeast is selected from the strains DBVPG 6P and DBVPG 7P.

9. A concentrated or cooked grape must, as obtainable with the process according to any previous claim, **characterized in that** it has a sugar content of at least 50 g/kg.

10. A concentrated or cooked grape must, as obtainable with the process according to any of the previous claims, **characterized in that** it has a sugar content of at least 50 g/kg and an ethyl alcohol content within the range of 1% to 15% in volume.

11. The use of the grape must according to claim 10, to produce wine.

12. A process to produce aromatic sweet wine, **characterized in** comprising the steps of fermenting a concentrated and/or cooked grape must with yeasts selected from yeasts of the genus *Saccaromyces, Zygosaccharomyces, Hanseniaspora, Kloeckera.*

13. A process according to any of the claims 10 to 12, **characterized in that** a concentrated and/or cooked grape must with a sugar content ranging from 250 to 380 g/kg is inoculated.

14. A food product, **characterized in that** it comprises a fruit must as obtainable with a process according to any of the claims from 1 to 8 or from 12 to 13.
